# EUROPEAN PATENT APPLICATION

(11) **EP 4 482 119 A1**
(43) Date of publication of application: **25.12.2024**
(21) Application number: 23181045.8
(22) Date of filing: 22.06.2023
(51) Int. Cl.: H04L 65/1016, H04L 9/40, H04W 12/80

(54) **METHOD PERFORMING LAWFUL INTERCEPTION IN A MOBILE COMMUNICATION NETWORK REGARDING A USER EQUIPMENT**

(71) Applicant: Deutsche Telekom AG, 53113 Bonn (DE)
(72) Inventor: MURHAMMER, Leopold, 1060 Wien (AT)
(74) Representative: Schwöbel, Thilo K.

(57) **Abstract**

The invention relates to a method for performing lawful interception in a mobile communication network regarding a user equipment being connected to the mobile communication network and/or regarding an IP multimedia subsystem session, IMS session,
wherein lawful interception is able to be realized, regarding the user equipment, wherein, in case of lawful interception being realized, a law enforcement agency is provided with corresponding lawful interception data,
wherein, in order to perform lawful interception regarding a specific user equipment and/or regarding a specific IP multimedia subsystem session, the method comprises the following steps:
-- in a first step, the specific IP multimedia subsystem session, involving the specific user equipment, is initiated, established or prepared to be established, wherein as part thereof session-specific signaling data are buffered,
-- in a second step, subsequent to the first step, in case that lawful interception is initiated while the specific IP multimedia subsystem session, involving the specific user equipment, is already established and operatively used, such initiation of lawful interception results in corresponding lawful interception data being generated and provided to the law enforcement agency, wherein, in addition, the session-specific signaling data are likewise provided to the law enforcement agency.

## Description

### BACKGROUND

The present invention relates a method for performing lawful interception in a mobile communication network regarding a user equipment being connected to the mobile communication network and/or regarding an IP multimedia subsystem session, IMS session, wherein lawful interception is able to be realized, regarding the user equipment, wherein, in case of lawful interception being realized, a law enforcement agency is provided with corresponding lawful interception data.

Furthermore, the present invention relates to a system or mobile communication network for performing lawful interception regarding a user equipment being connected to the mobile communication network and/or regarding an IP multimedia subsystem session, IMS session, wherein lawful interception is able to be realized, regarding the user equipment, wherein, in case of lawful interception being realized, a law enforcement agency is provided with corresponding lawful interception data.

Additionally, the present invention relates to a user equipment for performing lawful interception in a mobile communication network regarding a user equipment being connected to the mobile communication network and/or regarding an IP multimedia subsystem session, IMS session,
wherein lawful interception is able to be realized, regarding the user equipment, wherein, in case of lawful interception being realized, a law enforcement agency is provided with corresponding lawful interception data.

Furthermore, the present invention relates to a program and to a computer-readable medium for performing lawful interception in a mobile communication network regarding a user equipment and/or regarding an IP multimedia subsystem session according to the inventive method.

For any communication via mobile communication networks or public land mobile networks, network operators typically have the legal obligation to provide means for lawful interception, especially towards national authorities or law enforcement authorities.

In order for this to realize, the mobile communication network typically provides a special lawful interception interface which allows breaking out traffic that is being sent towards and/or received from such terminal devices (or user equipments) that are subject to lawful interception measures.

However, in case that lawful interception is to be applied mid-call or mid-session - i.e. lawful interception is started at a point in time when the call or session is already set up - not all information to (or about) this call (or session) is typically able to be made available to law enforcement authorities: When lawful interception starts mid-call, e.g. only the currently involved parties are sent as meta-data (e.g. in the form of or as part of a "lawful interception record") to law enforcement authorities, as well as call/communication content, starting with the activation of the lawful interception measure; the history of such a call or session can't be provided (e. g. details as to whether the call has been forwarded or transferred before (and therefore other parties were involved) and/or session description protocol, SDP, information, like the codec used for voice/video, the lack of such information might later on lead to problems when decoding the audio- and video stream).

### SUMMARY

An object of the present invention is to provide a technically simple, effective and especially cost effective solution for performing lawful interception in a mobile communication network regarding a user equipment being connected to the mobile communication network and/or regarding an IP multimedia subsystem session, IMS session, and especially in a manner such to be able to provide a law enforcement agency with meaningful lawful interception data even in case that such lawful interception is initiated and/or applied only in mid-call conditions and/or in mid-session conditions - i.e. in case that lawful interception is started at a point in time when the call or session is already set up. A further object of the present invention is to provide a corresponding system of mobile communication network, a corresponding user equipment, as well as a corresponding program and computer-readable medium.

The object of the present invention is achieved by a method for performing lawful interception in a mobile communication network regarding a user equipment being connected to the mobile communication network and/or regarding an IP multimedia subsystem session, IMS session,
wherein lawful interception is able to be realized, regarding the user equipment, wherein, in case of lawful interception being realized, a law enforcement agency is provided with corresponding lawful interception data,
wherein, in order to perform lawful interception regarding a specific user equipment and/or regarding a specific IP multimedia subsystem session, the method comprises the following steps:
   -- in a first step, the specific IP multimedia subsystem session, involving the specific user equipment, is initiated, established or prepared to be established, wherein as part thereof session-specific signaling data are buffered,
   -- in a second step, subsequent to the first step, in case that lawful interception is initiated while the specific IP multimedia subsystem session, involving the specific user equipment, is already established and operatively used, such initiation of lawful interception results in corresponding lawful interception data being generated and provided to the law enforcement agency, wherein, in addition, the session-specific signaling data are likewise provided to the law enforcement agency.

It is thereby advantageously possible, according to the present invention, that - by means of buffering the session-specific signaling data regarding the specific IP multimedia subsystem session - to be able to efficiently be able to reconstruct the specific IP multimedia subsystem session even though lawful interception is initiated only after the specific IP multimedia subsystem session has been initiated and/or established.

Hence, according to the present invention, it is advantageously possible that lawful interception is possible according to regulatory requirements even for situations involving visited mobile communication networks (or visited public land mobile networks), i.e. in roaming situations, and even in case of handover operations between a different visited mobile communication networks.

It is especially advantageously possible according to the present invention that such lawful interception functionality is able to be implemented by means of only buffering - i.e. storing only temporarily and with a strict requirement to delete such data once the respective specific IP multimedia subsystem session is terminated - such session-specific signaling data, especially the historic signaling information regarding the considered specific IP multimedia subsystem session, especially the session initiation protocol messages, SIP messages. This advantageously provides the possibility to realize and implement an increased level of data protection and transparency regarding user data.

According to the present invention, it is advantageously possible and preferred that the original signaling messages are buffered as part of the session-specific signaling data,
wherein especially the session-specific signaling data are buffered in an element or entity of the IP multimedia subsystem, especially a proxy call session control function, P-CSCF.

By means of buffering the original signaling messages as part of the session-specific signaling data, it is advantageously possible to reconstruct the specific IP multimedia subsystem session even though lawful interception is initiated only after the specific IP multimedia subsystem session has been established.

According to the present invention, it is advantageously furthermore possible and preferred that the session-specific signaling data comprise the historic signaling information regarding the specific IP multimedia subsystem session, especially starting from its establishment, wherein the session-specific signaling data especially comprise the session initiation protocol messages, SIP messages, generated or exchanged within the IP multimedia subsystem regarding the specific IP multimedia subsystem session, especially such SIP messages to and from the specific user equipment, especially SIP-invite messages, SIP-re-invite messages, SIP messages relating to a modification of the specific IP multimedia subsystem session such as relating to adding a video stream or to a change of a codec or a modification of a participant of the specific IP multimedia subsystem session, wherein the session-specific signaling data especially comprise, regarding each participant of the specific IP multimedia subsystem session, at least one out of the following:
-- the SIP-address,
-- the phone number,
-- the international mobile subscriber number, IMSI, and/or the permanent equipment identifier number,
-- an identifier information of the subscriber identity module; IMSI IMEI(4G)/permanent equipment ID number (5G),
-- an identifier information of the subscriber identity module, SIM card, or of the universal integrated circuit card, UICC card.

It is thereby advantageously possible to implement the present invention comparatively easily and efficiently, and, especially - by means of buffering the session-specific signaling data in the form of the historic signaling information of or regarding the respective specific IP multimedia subsystem session, starting from its establishment, especially the session initiation protocol messages, SIP messages - to be able to completely reconstruct the specific IP multimedia subsystem session even though lawful interception is initiated only after the specific IP multimedia subsystem session has been established.

According to the present invention, it is furthermore advantageously possible and preferred that, in a third step subsequent to the second step, the specific IP multimedia subsystem session, involving the specific user equipment, is terminated and the session-specific signaling data are deleted,
wherein in case that lawful interception is initiated as part of the second step, the session-specific signaling data are transmitted, together with the lawful interception data, to the law enforcement agency.

It is thereby advantageously possible to implement the present invention comparatively easily and efficiently. Especially, it is advantageously possible according to the present invention - by means of deleting the session-specific signaling data (in cases where no lawful interception is initiated) - to realize a comparatively high level of data protection.

According to the present invention, it is furthermore advantageously possible and preferred that the mobile communication network to which the specific user equipment is connected corresponds to a home mobile communication network, the home mobile communication network comprising an IP multimedia subsystem entity or functionality, wherein the IP multimedia subsystem entity or functionality is handling the specific IP multimedia subsystem session, and the home mobile communication network is connected to the law enforcement agency.

It is thereby advantageously possible to implement the present invention comparatively easily and efficiently in a scenario where the user equipment is connected to its home mobile communication network (or home public land mobile network).

According to the present invention, it is furthermore advantageously possible and preferred that the mobile communication network to which the specific user equipment is connected corresponds to a visited mobile communication network, wherein the specific user equipment is furthermore assigned to a home mobile communication network comprising an IP multimedia subsystem entity or functionality, wherein the IP multimedia subsystem entity or functionality is handling the specific IP multimedia subsystem session, wherein the mobile communication network comprises a lawful interception mirror IP multimedia subsystem state function, LMISF, wherein the law enforcement agency is connected to the mobile communication network via the lawful interception mirror IP multimedia subsystem state function, LMISF,
wherein especially the law enforcement agency is related to the mobile communication network as the visited mobile communication network of the specific user equipment, especially as opposed to the law enforcement agency of the home mobile communication network,
wherein especially - upon the specific IP multimedia subsystem session, involving the specific user equipment, being initiated, established or prepared to be established - the lawful interception mirror IP multimedia subsystem state function buffers the session-specific signaling data.

It is thereby advantageously possible to implement the present invention comparatively easily and efficiently in a scenario where the user equipment is not connected to its home mobile communication network (or home public land mobile network) but, rather, to a visited mobile communication network (or visited public land mobile network) and wherein lawful interception is nevertheless possible using the lawful interception mirror IP multimedia subsystem state function, LMISF, of the (visited) mobile communication network, and this despite the home mobile communication network comprising the IP multimedia subsystem entity or functionality handling the specific IP multimedia subsystem session.

According to the present invention, it is furthermore advantageously possible and preferred that the mobile communication network to which the user equipment is connected corresponds to a visited mobile communication network, wherein the specific user equipment has previously been connected - especially while the specific IP multimedia subsystem session having been active - to a further visited mobile communication network and wherein the specific user equipment is furthermore assigned to a home mobile communication network comprising an IP multimedia subsystem entity or functionality, wherein the IP multimedia subsystem entity or functionality is handling the specific IP multimedia subsystem session, wherein the mobile communication network comprises a lawful interception mirror IP multimedia subsystem state function, LMISF, wherein the law enforcement agency is connected to the mobile communication network via the lawful interception mirror IP multimedia subsystem state function, LMISF, wherein especially the law enforcement agency is related to the mobile communication network as the visited mobile communication network of the specific user equipment, especially as opposed to the law enforcement agencies of the home mobile communication network and the further visited mobile communication network, wherein especially the session-specific signaling data - upon the specific IP multimedia subsystem session, involving the specific user equipment, being initiated, established or prepared to be established - are buffered by the IP multimedia subsystem entity or functionality, and, upon the specific IP multimedia subsystem session being handled by the mobile communication network, the session-specific signaling data are transmitted to the mobile communication network, especially to the packet core of the mobile communication network.

It is thereby advantageously possible to implement the present invention comparatively easily and efficiently in a scenario where the user equipment is not connected to its home mobile communication network (or home public land mobile network) but, rather, to a visited mobile communication network (or visited public land mobile network) that is different to a further visited mobile communication network to which the user equipment has been connected upon initiation of the specific IP multimedia subsystem session, and wherein lawful interception is nevertheless possible using the lawful interception mirror IP multimedia subsystem state function, LMISF, of the (visited) mobile communication network, and this despite the home mobile communication network comprising the IP multimedia subsystem entity or functionality handling the specific IP multimedia subsystem session and despite the specific IP multimedia subsystem session having been initiated while the having been connected to the further visited mobile communication network.

According to the present invention, it is furthermore advantageously possible and preferred that the IP multimedia subsystem session is established between the user equipment and a further user equipment, the further user equipment being either directly or indirectly connected to the mobile communication network, especially to the home mobile communication network of the user equipment.

It is thereby advantageously possible to implement the present invention comparatively easily and efficiently.

Furthermore, the present invention relates to a system or to a mobile communication network for performing lawful interception regarding a user equipment being connected to the mobile communication network and/or regarding an IP multimedia subsystem session, IMS session,
wherein lawful interception is able to be realized, regarding the user equipment, wherein, in case of lawful interception being realized, a law enforcement agency is provided with corresponding lawful interception data,
wherein, in order to perform lawful interception regarding a specific user equipment and/or regarding a specific IP multimedia subsystem session, the system or mobile communication network is configured such that:
   -- the specific IP multimedia subsystem session, involving the specific user equipment, is initiated, established or prepared to be established, wherein as part thereof session-specific signaling data are defined and buffered,
   -- in case that lawful interception is initiated while the specific IP multimedia subsystem session, involving the specific user equipment, is already established and operatively used, such initiation of lawful interception results in corresponding lawful interception data being generated and provided to the law enforcement agency, wherein, in addition, the session-specific signaling data are likewise provided to the law enforcement agency.

Furthermore, the present invention relates to a user equipment for performing lawful interception in a mobile communication network regarding a user equipment being connected to the mobile communication network and/or regarding an IP multimedia subsystem session, IMS session,
wherein lawful interception is able to be realized, regarding the user equipment, wherein, in case of lawful interception being realized, a law enforcement agency is provided with corresponding lawful interception data,
wherein, in order to perform lawful interception regarding a specific user equipment and/or regarding a specific IP multimedia subsystem session, the user equipment is configured such that:
   -- the specific IP multimedia subsystem session, involving the specific user equipment, is initiated, established or prepared to be established, wherein as part thereof session-specific signaling data are defined and buffered,
   -- in case that lawful interception is initiated while the specific IP multimedia subsystem session, involving the specific user equipment, is already established and operatively used, such initiation of lawful interception results in corresponding lawful interception data being generated and provided to the law enforcement agency, wherein, in addition, the session-specific signaling data are likewise provided to the law enforcement agency.

Additionally, the present invention relates to a program comprising a computer readable program code which, when executed on a computer and/or on a network node of a mobile communication network and/or on an IP multimedia subsystem entity or functionality and/or on a lawful interception mirror IP multimedia subsystem state function, LMISF, or in part on a network node of a mobile communication network and/or in part on an IP multimedia subsystem entity or functionality and/or in part on a lawful interception mirror IP multimedia subsystem state function, LMISF, causes the computer and/or the network node of the mobile communication network and/or the IP multimedia subsystem entity or functionality and/or the lawful interception mirror IP multimedia subsystem state function, LMISF, to perform the inventive method.

Still additionally, the present invention relates to a computer-readable medium comprising instructions which when executed on a computer and/or on a network node of a mobile communication network and/or on an IP multimedia subsystem entity or functionality and/or on a lawful interception mirror IP multimedia subsystem state function, LMISF, or in part on a network node of a mobile communication network and/or in part on an IP multimedia subsystem entity or functionality and/or in part on a lawful interception mirror IP multimedia subsystem state function, LMISF, causes the computer and/or the network node of the mobile communication network and/or the IP multimedia subsystem entity or functionality and/or the lawful interception mirror IP multimedia subsystem state function, LMISF, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

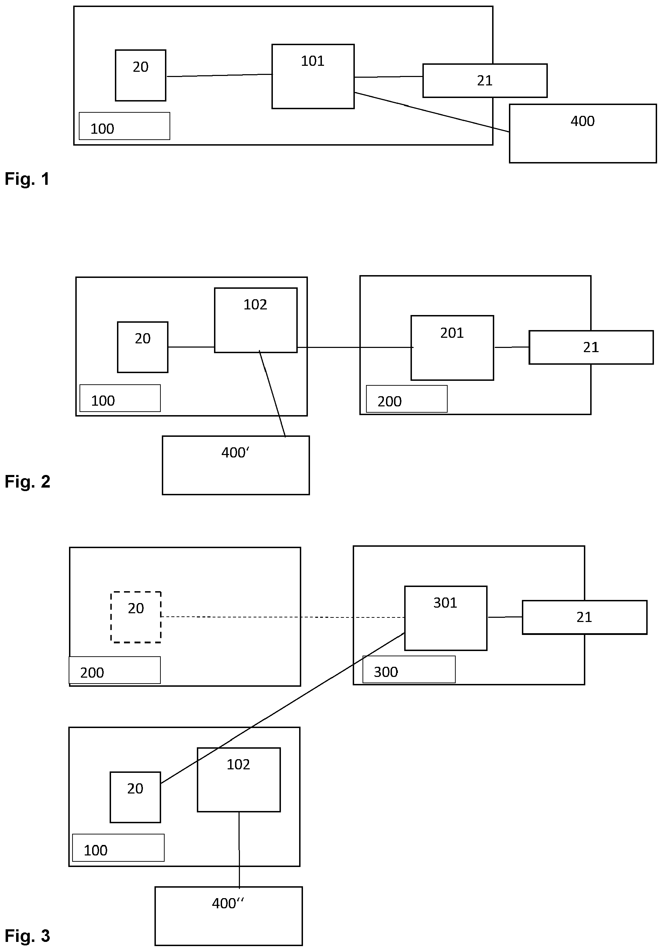

Figure 1 schematically and exemplarity illustrates a scenario in view of performing lawful interception where a user equipment - regarding which lawful interception is performed - is connected to its home mobile communication network (or home public land mobile network).
Figure 2 schematically and exemplarity illustrates a scenario in view of performing lawful interception where a user equipment - regarding which lawful interception is performed - is not connected to its home mobile communication network (or home public land mobile network) but, rather, to a visited mobile communication network (or visited public land mobile network).
Figure 3 schematically and exemplarity illustrates a scenario in view of performing lawful interception where a user equipment - regarding which lawful interception is performed - is not connected to its home mobile communication network (or home public land mobile network) but, rather, to a visited mobile communication network (or visited public land mobile network) that is different to a further visited mobile communication network to which the user equipment has been connected upon initiation of the specific IP multimedia subsystem session.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile communication network 100, especially a public land mobile network 100, is schematically shown. The mobile communication network 100 typically comprises an access network (typically comprising a plurality of base station entities) and a core network; however, for the sake of simplicity, the access network and the core network are not specifically represented by means of reference signs. The mobile communication network 100 is preferably a cellular telecommunications network comprising, typically, a plurality of radio cells and, typically, a plurality of user equipments. The schematical representation of Figure 1, only shows one user equipment 20 as part of or connected to the mobile communication network 100.

According to the present invention, the user equipment 20 is provided with communication services by means of using an IP multimedia subsystem session, handled by an IP multimedia subsystem entity or functionality 101 of the mobile communication network 100. Furthermore according to the present invention, the IP multimedia subsystem session is established between the user equipment 20 and a further user equipment 21, the further user equipment 21 being either directly or indirectly connected to the mobile communication network 100. In Figure 1, the further user equipment 21 is exemplarily shown as being part or connected to the mobile communication network 100; however, this is not necessarily the case as the further user equipment 21 could very well also be located, or connected to, any other telecommunications network that is connected to the mobile communication network 100.

Furthermore according to the present invention, lawful interception is able to be realized, regarding the user equipment 20, by means of using a law enforcement agency 400 that is either part of the mobile communication network 100, or connected to the mobile communication network 100.

Figure 1 schematically and exemplarily illustrates a scenario in view of performing lawful interception (using the law enforcement agency 400) where the user equipment 20 - regarding which lawful interception is performed - is connected to its home mobile communication network (or home public land mobile network), i.e. the mobile communication network 100 corresponds to the home mobile communication network of the user equipment 20.

Upon the specific IP multimedia subsystem session - involving the specific user equipment 20 - being initiated (or established or prepared to be established), session-specific signaling data are buffered, especially by the IP multimedia subsystem entity or functionality 101 handling the specific IP multimedia subsystem session. In case that, subsequently (to the initiation of the IP multimedia subsystem session), lawful interception is initiated (i.e. while the specific IP multimedia subsystem session, involving the specific user equipment 20, is already established and operatively used), such initiation of lawful interception results in corresponding lawful interception data being generated and provided to the law enforcement agency 400, wherein, in addition, the session-specific signaling data are likewise provided to the law enforcement agency 400.

In Figure 2, again the mobile communication network 100, especially a public land mobile network 100, is schematically shown. The schematical representation of Figure 2, only shows the user equipment 20 as part of or connected to the mobile communication network 100, and, again, the user equipment 20 is provided with communication services by means of using an IP multimedia subsystem session, handled by an IP multimedia subsystem entity or functionality.

However, in contrast to Figure 1, Figure 2 schematically and exemplarity illustrates the case where the user equipment 20 is not connected to its home mobile communication network (or home public land mobile network) but, rather, to a visited mobile communication network (or visited public land mobile network). Hence, the mobile communication network 100 is now the visited mobile communication network (of the considered user equipment 20), and another mobile communication network 200 is the home mobile communication network of the user equipment 20.

In such a scenario, the user equipment 20 is provided with communication services by means of using the IP multimedia subsystem session, handled by the IP multimedia subsystem entity or functionality 201 of the (or its) home mobile communication network 200. Again, the IP multimedia subsystem session is established between the user equipment 20 and the further user equipment 21, the further user equipment 21 being either directly or indirectly connected to the home mobile communication network 200. In Figure 2, the further user equipment 21 is exemplarily shown as being part or connected to the home mobile communication network 200 (of the user equipment 20); however, this is not necessarily the case as the further user equipment 21 could very well also be located, or connected to, any other telecommunications network that is connected to the home mobile communication network 200 of the user equipment 20.

Furthermore according to the present invention, lawful interception is able to be realized, regarding the user equipment 20, by means of serving a law enforcement agency 400' that is either part of the mobile communication network 100, or connected to the mobile communication network 100, wherein a lawful interception mirror IP multimedia subsystem state function, LMISF, 102 is used. The law enforcement agency 400' is (at least) connected to the mobile communication network 100 (i.e. the visited mobile communication network of the user equipment 20 in the considered scenario) via the lawful interception mirror IP multimedia subsystem state function, LMISF, 102.

Figure 2 schematically and exemplarity illustrates a scenario in view of performing lawful interception where the user equipment 20 - regarding which lawful interception is performed - is not connected directly to its home mobile communication network 200 (or home public land mobile network) but, rather, to the mobile communication network 100 as its visited mobile communication network (or visited public land mobile network). Upon the specific IP multimedia subsystem session - involving the specific user equipment 20 - being initiated (or established or prepared to be established), session-specific signaling data are buffered - by the lawful interception mirror IP multimedia subsystem state function 102 (of the (visited) mobile communication network 100). In case that, subsequently (to the initiation of the IP multimedia subsystem session), lawful interception is initiated (i.e. while the specific IP multimedia subsystem session, involving the specific user equipment 20, is already established and operatively used), such initiation of lawful interception results in corresponding lawful interception data being generated and provided to the law enforcement agency 400' (of the (visited) mobile communication network 100), wherein, in addition, the session-specific signaling data are likewise provided to the law enforcement agency 400' (of the (visited) mobile communication network 100).

In Figure 3, again the mobile communication network 100, especially a public land mobile network 100, is schematically shown. The schematical representation of Figure 3, only shows the user equipment 20 as part of or connected to the mobile communication network 100, and, again, the user equipment 20 is provided with communication services by means of using an IP multimedia subsystem session, handled by an IP multimedia subsystem entity or functionality.

Just as shown in Figure 2, also Figure 3 schematically and exemplarity illustrates the case where the user equipment 20 is not connected to its home mobile communication network (or home public land mobile network) but, rather, to a visited mobile communication network (or visited public land mobile network), i.e. the mobile communication network 100 corresponds to a visited mobile communication network as with the scenario shown in Figure 2; however, in contrast to the scenario shown in Figure 2, Figure 3 schematically and exemplarity illustrates the case where the user equipment 20 is connected to a visited mobile communication network 100 (or visited public land mobile network) that is different to a further visited mobile communication network 200 to which the user equipment 20 has been connected upon initiation of the specific IP multimedia subsystem session; in addition, Figure 3 also schematically shows the home mobile communication network 300 of the user equipment 20.

Hence, the mobile communication network 100 is the (current) visited mobile communication network (of the considered user equipment 20), the further visited mobile communication network 200 corresponds to the visited mobile communication network of the considered user equipment 20 at the time of initiation of the specific IP multimedia subsystem session (this being schematically represented, in Figure 3, by means of a dashed representation of the user equipment 20 and a dashed line towards the home mobile communication network 300), and still another mobile communication network 300 is the home mobile communication network of the user equipment 20.

In such a scenario, the user equipment 20 is provided with communication services by means of using the IP multimedia subsystem session, handled by the IP multimedia subsystem entity or functionality 301 of the (or its) home mobile communication network 300. Again, the IP multimedia subsystem session is established between the user equipment 20 and the further user equipment 21, the further user equipment 21 being either directly or indirectly connected to the home mobile communication network 300. In Figure 3, the further user equipment 21 is exemplarily shown as being part or connected to the home mobile communication network 300 (of the user equipment 20); however, this is not necessarily the case as the further user equipment 21 could very well also be located, or connected to, any other telecommunications network that is connected to the home mobile communication network 300 of the user equipment 20.

Furthermore according to the present invention, lawful interception is able to be realized, regarding the user equipment 20, by means of serving a law enforcement agency 400" that is either part of the mobile communication network 100, or connected to the mobile communication network 100, wherein a lawful interception mirror IP multimedia subsystem state function, LMISF, 102 is used. The law enforcement agency 400" is (at least) connected to the mobile communication network 100 (i.e. the (current) visited mobile communication network of the user equipment 20 in the considered scenario) via the lawful interception mirror IP multimedia subsystem state function, LMISF, 102. Figure 3 schematically and exemplarity illustrates a scenario in view of performing lawful interception where the user equipment 20 - regarding which lawful interception is performed - is not directly connected to its home mobile communication network 300 (or home public land mobile network) but, rather, to the mobile communication network 100 as its (current) visited mobile communication network (or (current) visited public land mobile network) that is different to the further visited mobile communication network 200 to which the user equipment 20 has (previously) been connected upon initiation of the specific IP multimedia subsystem session.

Upon the specific IP multimedia subsystem session - involving the specific user equipment 20 - being initiated (or established or prepared to be established), session-specific signaling data are buffered - by the lawful interception mirror IP multimedia subsystem state function 102 (of the (current visited) mobile communication network 100). In case that, subsequently (to the initiation of the IP multimedia subsystem session), lawful interception is initiated (i.e. while the specific IP multimedia subsystem session, involving the specific user equipment 20, is already established and operatively used), such initiation of lawful interception results in corresponding lawful interception data being generated and provided to the law enforcement agency 400" (of the (current visited) mobile communication network 100), wherein, in addition, the session-specific signaling data are likewise provided to the law enforcement agency 400" (of the (current visited) mobile communication network 100).

Hence, according to the present invention, a solution is provided for performing lawful interception regarding the user equipment 20 being connected to the mobile communication network 100 and/or regarding an IP multimedia subsystem session, IMS session according to the following use cases or scenarios:
-- start of lawful interception for an already ongoing IMS session, when the user equipment 20 is in the home mobile communication network, cf. Figure 1: Responsible for lawful interception is, in this case, typically the IMS domain (IP multimedia subsystem entity or functionality 101) in the home mobile communication network 100 (home public land mobile network); by means of buffering the session-specific signaling data, it is advantageously possible, according to the present invention, to solve the problem (of conventionally known mobile communication networks) according to which signaling information that is being exchanged prior to the start of lawful interception is not available and the IMS domain (or IP multimedia subsystem entity or functionality 101) only delivers the information available at the start of lawful interception (and, of course, from that point in time all signaling information for the considered call/session);
-- start of lawful interception for an already ongoing IMS session, when the user equipment 20 is roaming in a visited network, and where lawful interception is requested by/in the visited mobile communication network, cf. Figure 2: The IMS session is typically home routed (from the (visited) mobile communication network 100), so all IMS signaling is handled in the IMS in the home mobile communication network 200 (or home public land mobile network); to enable lawful interception in the (visited) mobile communication network 100, the dedicated function (lawful interception mirror IP multimedia subsystem state function 102) in the (visited) mobile communication network 200 is typically installed or used, especially connected to the enhanced packet core, EPC, in the (visited) mobile communication network 100; for lawful interception, the lawful interception mirror IP multimedia subsystem state function 102 has to perform the same tasks as the IP multimedia subsystem entity or functionality 101 in the home mobile communication network would do (in case of the scenario shown in Figure 1); by means of buffering the session-specific signaling data, it is advantageously possible, according to the present invention, to solve the same problem (of conventionally known mobile communication networks also in case a visited mobile communication network is used) according to which signaling information that is being exchanged prior to the start of lawful interception (historic signaling information) is not available and can, hence, not be provided to the law enforcement agency 400' of or associated with the (visited) mobile communication network 100;
-- start of lawful interception for an already ongoing IMS session, when the user equipment 20 is roaming in a visited mobile communication network 100 to which it has moved from a further visited mobile communication network 200, and lawful interception is requested by/in the visited mobile communication network 100; the IMS signalling is home routed (from the (visited) mobile communication network 100) and handled by IMS in the home mobile communication network 300 (or home public land mobile network); the (new) visited mobile communication network 100 only sees a handover of a packet data unit, PDU, session; hence, again, by means of buffering the session-specific signaling data, it is advantageously possible, according to the present invention, to solve the same problem (of conventionally known mobile communication networks also in case a visited mobile communication network is used) according to which the EPC in the (new) visited mobile communication network 100 has no information of involved parties or any other information regarding the considered specific IMS session; thus, in conventionally known mobile communication networks, the (visited) mobile communication network 100 even cannot decide whether a session shall be intercepted or not, as IMS signaling from the past (e. g. during call set-up) is not available at the (visited) mobile communication network 100).

Hence, the present invention provides a solution regarding mid-call lawful interception in all such use cases.

The present invention is especially able to be implemented in, or for, fourth generation mobile communication networks (4G / LTE / voice over LTE, VoLTE); however, the same is valid for fifth generation mobile communication networks (5G / 5GC / voice over NR, VoNR), in which case the enhance packet core, EPC, needs to be replaced by 5GC (5G core), S8HR by N9HR, and VoLTE by VoNR (VoIMS).

For the use case / scenario shown in Figure 1, the IMS starts to generate a log buffer (buffering of session-specific signaling data) for each new IMS session, starting with the first signaling message for each session, especially recording all signaling messages belonging to this session. At the end of the call / session the IMS deletes this log buffer (buffering). In case lawful interception is to be started during an ongoing IMS session / call, the IMS (IP multimedia subsystem entity or functionality 101) transmits this log buffer to law enforcement 400, either in a new message / interception record, or enhancing the existing message for "start of interception with ongoing IMS session".

For the use case / scenario shown in Figure 2, the lawful interception mirror IP multimedia subsystem state function, LMISF, 102 in the visited mobile communication network 100 does exactly the same as the IP multimedia subsystem entity or functionality 101 in the case /scenario of Figure 1: The LMISF 102 in the visited mobile communication network 100 starts to generate a log buffer (buffering) for each new IMS session, starting with the first signaling message for each session, recording (buffering) all signaling messages belonging to this session. At the end of the call / session the LMISF 102 deletes this log buffer. In case lawful interception is to be started during an ongoing IMS session / call, the LMISF 102 transmits this log buffer to law enforcement 400', either in a new message / interception record, or enhancing the existing message for "start of interception with ongoing IMS session".

For the use case / scenario shown in Figure 3, the IP multimedia subsystem entity or functionality 301 in the home mobile communication network 300 does the generation of the log buffer as described for the case shown in Figure 1. The IP multimedia subsystem entity or functionality 301 in the home mobile communication network 300 as well as the EPC in the home mobile communication network 300 get the information that the IMS session is handed over from the further visited mobile communication network 200 to the visited mobile communication network 100; when such inter-PLMN handover is detected in the home mobile communication network 300, the home mobile communication network 300 (IMS or EPC) sends the log buffer (of buffered data) for this IMS session to the EPC of the (new) visited mobile communication network 100 where it can be made available to the LMISF 102 in the visited mobile communication network 100.

Alternatively to the home mobile communication network 300 providing the buffered session-specific signaling data, it is also possible and preferred, according to the present invention, that the further visited mobile communication network 200 (via its lawful interception mirror IP multimedia subsystem state function) sends the log buffer (of buffered data) for this IMS session to the EPC of the (new) visited mobile communication network 100 where it can be made available to the LMISF 102 in the visited mobile communication network 100.

Thus, according to both these possible alternatives, the LMISF 102 in the visited mobile communication network 100 has all the information needed to decide whether this is a call to be intercepted or not, and also has the necessary additional information about session description protocol, SDP, data like the codec information. In case a further inter-PLMN handover is detected by the home mobile communication network 300, the home mobile communication network 300 would provide the latest version of the log-file to the new visited mobile communication network.

Examples regarding mid-call lawful interception for the use cases / scenarios: Regarding the use case of Figure 1: Alice with UE1 20 calls Bob UE2 21; Bob has a call diversion to Charles (UE3), and now Alice, as a consequence of calling Bob and Bob having the call diversion to Charles, calls (or is connected to) Charles:

In conventionally known mobile communication networks, if lawful interception is activated at that time, the only information available is that Alice is talking to Charles; the fact that Bob was originally called and Alice did not call Charles directly (but rather Bob) is no longer easily recognizable.

According to the present invention, especially at the beginning of each call / session, IMS (IP multimedia subsystem entity or functionality) creates an individual log buffer (buffering) for this call and buffers there each signaling message from and to the user equipment 20; at the end of each call, this call-specific log buffer is deleted; only in case that lawful interception is activated for the user equipment 20 (and the call is already active), the log buffer is also sent from the IMS to the lawful interception authority in addition to the already standardized lawful interception data.

The further user equipment 21 ("remote" user equipment) is not relevant here; the so-called "other party" can be in the same IMS, in another network of the same country, or also any participant abroad. It is equally irrelevant whether the ("remote") further user equipment 21 is a mobile or a fixed line, and whether the ("remote") further user equipment 20 is in its own network or is logged into another network.

Regarding the use case of Figure 2:

In conventionally known mobile communication networks, lawful interception is a problem for the visited mobile communication network 100 as the S8 home routing is used in the visited mobile communication network 100 and all call handling is done in the IP multimedia subsystem entity or functionality 201 of the home mobile communication network 200.

According to the present invention, there is a LMISF (LI Mirror IMS State Function) which is part of the packet core in the visited mobile communication network 100 and performs lawful interception for the IMS portion in the visited mobile communication network 100. For "mid-call" lawful interception, lawful interception mirror IP multimedia subsystem state function 102 acts in a manner analogous to the IP multimedia subsystem entity or functionality 101 in the scenario shown in Figure 1: Hence, LMISF 102 creates an individual log buffer for the respective call at the beginning of each call/session and buffers there each signaling message to and from the user equipment 20; at the end of each call, this call specific log buffer is deleted; only in case that lawful interception is activated for the user equipment 20 (and the call is already active), the log buffer of LMISF 102 is sent to the lawful interception authority 400' in addition to the already standardized lawful interception data.

Regarding the use case of Figure 3 (Handover from a further visited mobile communication network 200 to a visited mobile communication network 100):

In conventionally known mobile communication networks, lawful interception is a problem for the (new) visited mobile communication network 100 as the S8 home routing is used in the (further) visited mobile communication network 200 and all call handling is done in the IP multimedia subsystem entity or functionality 301 of the home mobile communication network 300. During the handover from the (old) further visited mobile communication network 200 to the (new) visited mobile communication network 100 there is the problem that the new visited mobile communication network 100 only sees that an IMS call (an IMS session) is taken over from an (old) visited mobile communication network 200, but the (new) visited mobile communication network 100 has no information about this call / session; likewise lawful interception mirror IP multimedia subsystem state function 102 in the (new) visited mobile communication network 100 has no information, and thus cannot even decide whether a call is to be monitored or not, since it does not know the parties involved and it is also not necessary for signaling to be exchanged between the user equipments again here. The LMISF in the (old) visited mobile communication network 200 (not shown in Figure 3 but supposed to be present analogously to Figure 2) could have this information but since not every country needs to have an LMISF, and exchanging lawful interception information across PLMN (network) boundaries is not desired, an alternative approach is required.

Regarding the use case of Figure 1: Alice with UE1 20 calls Bob UE2 21; Bob has a call diversion to Charles (UE3), and now Alice, as a consequence of calling Bob and Bob having the call diversion to Charles, calls (or is connected to) Charles:

In conventionally known mobile communication networks, if lawful interception is activated at that time, the only information available is that Alice is talking to Charles; the fact that Bob was originally called and Alice did not call Charles directly (but rather Bob) is no longer easily recognizable.

According to the present invention, especially at the beginning of each call / session, IMS (IP multimedia subsystem entity or functionality) creates an individual log buffer (buffering)

Hence, regarding the use case of Figure 3, if Alice with UE1 20 calls Bob UE2 21, and Alice has, as its home public land mobile network, a first mobile communication network 300, but is logged into a second mobile communication network 200 in a first country; if the call has already been set up, and now Alice is traveling from the first country to a second country where a monitoring mandate (of the law enforcement authorities) exists regarding Alice: In conventionally known mobile communication networks, on handover from the second mobile communication network 200 to the mobile communication network 100 in the second country, only the packet core signaling and payload channel is handed over; LMISF in the second country has no information which signaling information was exchanged with the IMS (e.g. which subscribers, which codec, etc.); thus LMISF in the second country cannot detect whether this is to be monitored or not.

According to the present invention, the IMS (of the first mobile communication network 300, i.e. the home public land mobile network of Alice) creates an individual log buffer for this call at the beginning of each call / session and buffers there each signaling message from and to UE1 20; upon the IMS of the first mobile communication network (Alice's HPLM) detects that a handover to another PLMN 100 (towards the mobile communication network in the second country) is taking place for an already active call, the call-specific log buffer is sent to the packet core of the new PLMN 100 (i.e. the mobile communication network in the second country); at the end of each call (and without any lawful interception measure), this call-specific log buffer is deleted in the IMS (of the first mobile communication network 300); however, due to the lawful interception mandate being active in the second country regarding Alice, the packet core in new PLMN 100 passes the log buffer to the LMISF component. The LMISF now has all the data and can decide whether to monitor the call. The log buffer will be maintained for this call in any case and all new signaling messages will be buffered here; hence, if there is a monitoring request, lawful interception will be activated as usual and the data will be sent to the authorities (meta data of the call, historical call information from the log buffer, and if required the call content from the time of activation).

## Claims

1. Method for performing lawful interception in a mobile communication network (100) regarding a user equipment (20) being connected to the mobile communication network (100) and/or regarding an IP multimedia subsystem session, IMS session,
wherein lawful interception is able to be realized, regarding the user equipment (20), wherein, in case of lawful interception being realized, a law enforcement agency (400, 400', 400") is provided with corresponding lawful interception data, wherein, in order to perform lawful interception regarding a specific user equipment (20) and/or regarding a specific IP multimedia subsystem session, the method comprises the following steps:
-- in a first step, the specific IP multimedia subsystem session, involving the specific user equipment (20), is initiated, established or prepared to be established, wherein as part thereof session-specific signaling data are buffered,
-- in a second step, subsequent to the first step, in case that lawful interception is initiated while the specific IP multimedia subsystem session, involving the specific user equipment (20), is already established and operatively used, such initiation of lawful interception results in corresponding lawful interception data being generated and provided to the law enforcement agency (400, 400', 400"), wherein, in addition, the session-specific signaling data are likewise provided to the law enforcement agency (400, 400', 400").

2. Method according to claim 1, wherein the original signaling messages are buffered as part of the session-specific signaling data,
wherein especially the session-specific signaling data are buffered in an element or entity of the IP multimedia subsystem, especially a proxy call session control function, P-CSCF.

3. Method according to one of the preceding claims, wherein the session-specific signaling data comprise the historic signaling information regarding the specific IP multimedia subsystem session, especially starting from its establishment, wherein the session-specific signaling data especially comprise the session initiation protocol messages, SIP messages, generated or exchanged within the IP multimedia subsystem regarding the specific IP multimedia subsystem session, especially such SIP messages to and from the specific user equipment (20), especially SIP-invite messages, SIP-re-invite messages, SIP messages relating to a modification of the specific IP multimedia subsystem session such as relating to adding a video stream or to a change of a codec or a modification of a participant of the specific IP multimedia subsystem session, wherein the session-specific signaling data especially comprise, regarding each participant of the specific IP multimedia subsystem session, at least one out of the following:
-- the SIP-address,
-- the phone number,
-- the international mobile subscriber number, IMSI, and/or the permanent equipment identifier number,
-- an identifier information of the subscriber identity module, IMSI IMEI(4G)/permanent equipment ID number (5G),
-- an identifier information of the subscriber identity module, SIM card, or of the universal integrated circuit card, UICC card.

4. Method according to one of the preceding claims, wherein, in a third step subsequent to the second step, the specific IP multimedia subsystem session, involving the specific user equipment (20), is terminated and the session-specific signaling data are deleted,
wherein in case that lawful interception is initiated as part of the second step, the session-specific signaling data are transmitted, together with the lawful interception data, to the law enforcement agency (400, 400', 400").

5. Method according to one of the preceding claims, wherein the mobile communication network (100) to which the specific user equipment (20) is connected corresponds to a home mobile communication network, the home mobile communication network comprising an IP multimedia subsystem entity or functionality (101), wherein the IP multimedia subsystem entity or functionality (101) is handling the specific IP multimedia subsystem session, and the home mobile communication network is connected to the law enforcement agency (400).

6. Method according to one of the preceding claims, wherein the mobile communication network (100) to which the specific user equipment (20) is connected corresponds to a visited mobile communication network, wherein the specific user equipment (20) is furthermore assigned to a home mobile communication network (200) comprising an IP multimedia subsystem entity or functionality (201), wherein the IP multimedia subsystem entity or functionality (201) is handling the specific IP multimedia subsystem session, wherein the mobile communication network (100) comprises a lawful interception mirror IP multimedia subsystem state function, LMISF, (102), wherein the law enforcement agency (400') is connected to the mobile communication network (100) via the lawful interception mirror IP multimedia subsystem state function, LMISF, (102), wherein especially the law enforcement agency (400') is related to the mobile communication network (100) as the visited mobile communication network of the specific user equipment (20), especially as opposed to the law enforcement agency (400) of the home mobile communication network (200),
wherein especially - upon the specific IP multimedia subsystem session, involving the specific user equipment (20), being initiated, established or prepared to be established - the lawful interception mirror IP multimedia subsystem state function (102) buffers the session-specific signaling data.

7. Method according to one of the preceding claims, wherein the mobile communication network (100) to which the user equipment (20) is connected corresponds to a visited mobile communication network, wherein the specific user equipment (20) has previously been connected - especially while the specific IP multimedia subsystem session having been active - to a further visited mobile communication network (200) and wherein the specific user equipment (20) is furthermore assigned to a home mobile communication network (300) comprising an IP multimedia subsystem entity or functionality (301), wherein the IP multimedia subsystem entity or functionality (301) is handling the specific IP multimedia subsystem session, wherein the mobile communication network (100) comprises a lawful interception mirror IP multimedia subsystem state function, LMISF, (102), wherein the law enforcement agency (400") is connected to the mobile communication network (100) via the lawful interception mirror IP multimedia subsystem state function, LMISF, (102),
wherein especially the law enforcement agency (400") is related to the mobile communication network (100) as the visited mobile communication network of the specific user equipment (20), especially as opposed to the law enforcement agencies (400, 400') of the home mobile communication network (300) and the further visited mobile communication network (200),
wherein especially the session-specific signaling data - upon the specific IP multimedia subsystem session, involving the specific user equipment (20), being initiated, established or prepared to be established - are buffered by the IP multimedia subsystem entity or functionality (301), and, upon the specific IP multimedia subsystem session being handled by the mobile communication network (100), the session-specific signaling data are transmitted to the mobile communication network (100), especially to the packet core of the mobile communication network (100).

8. Method according to one of the preceding claims, wherein the IP multimedia subsystem session is established between the user equipment (20) and a further user equipment (21), the further user equipment (21) being either directly or indirectly connected to the mobile communication network (100, 200, 300), especially to the home mobile communication network (100, 200, 300) of the user equipment (20).

9. System or mobile communication network (100) for performing lawful interception regarding a user equipment (20) being connected to the mobile communication network (100) and/or regarding an IP multimedia subsystem session, IMS session,
wherein lawful interception is able to be realized, regarding the user equipment (20), wherein, in case of lawful interception being realized, a law enforcement agency (400) is provided with corresponding lawful interception data, wherein, in order to perform lawful interception regarding a specific user equipment (20) and/or regarding a specific IP multimedia subsystem session, the system or mobile communication network (100) is configured such that:
-- the specific IP multimedia subsystem session, involving the specific user equipment (20), is initiated, established or prepared to be established, wherein as part thereof session-specific signaling data are defined and buffered,
-- in case that lawful interception is initiated while the specific IP multimedia subsystem session, involving the specific user equipment (20), is already established and operatively used, such initiation of lawful interception results in corresponding lawful interception data being generated and provided to the law enforcement agency (400, 400', 400"), wherein, in addition, the session-specific signaling data are likewise provided to the law enforcement agency (400, 400', 400").

10. User equipment (20) for performing lawful interception in a mobile communication network (100) regarding a user equipment (20) being connected to the mobile communication network (100) and/or regarding an IP multimedia subsystem session, IMS session,
wherein lawful interception is able to be realized, regarding the user equipment (20), wherein, in case of lawful interception being realized, a law enforcement agency (400, 400', 400") is provided with corresponding lawful interception data, wherein, in order to perform lawful interception regarding a specific user equipment (20) and/or regarding a specific IP multimedia subsystem session, the user equipment (20) is configured such that:
-- the specific IP multimedia subsystem session, involving the specific user equipment (20), is initiated, established or prepared to be established, wherein as part thereof session-specific signaling data are defined and buffered,
-- in case that lawful interception is initiated while the specific IP multimedia subsystem session, involving the specific user equipment (20), is already established and operatively used, such initiation of lawful interception results in corresponding lawful interception data being generated and provided to the law enforcement agency (400, 400', 400"), wherein, in addition, the session-specific signaling data are likewise provided to the law enforcement agency (400, 400', 400").

11. Program comprising a computer readable program code, which, when executed on a computer and/or on a network node of a mobile communication network (100) and/or on an IP multimedia subsystem entity or functionality (101, 201, 301) and/or on a lawful interception mirror IP multimedia subsystem state function, LMISF, (102), or in part on a network node of a mobile communication network (100) and/or in part on an IP multimedia subsystem entity or functionality (101, 201, 301) and/or in part on a lawful interception mirror IP multimedia subsystem state function, LMISF, (102), causes the computer and/or the network node of the mobile communication network (100) and/or the IP multimedia subsystem entity or functionality (101, 201, 301) and/or the lawful interception mirror IP multimedia subsystem state function, LMISF, (102) to perform a method according one of claims 1 to 7.

12. Computer-readable medium comprising instructions which when executed on a computer and/or on a network node of a mobile communication network (100) and/or on an IP multimedia subsystem entity or functionality (101, 201, 301) and/or on a lawful interception mirror IP multimedia subsystem state function, LMISF, (102), or in part on a network node of a mobile communication network (100) and/or in part on an IP multimedia subsystem entity or functionality (101, 201, 301) and/or in part on a lawful interception mirror IP multimedia subsystem state function, LMISF, (102), causes the computer and/or the network node of the mobile communication network (100) and/or the IP multimedia subsystem entity or functionality (101, 201, 301) and/or the lawful interception mirror IP multimedia subsystem state function, LMISF, (102) to perform a method according to one of claims 1 to 7.

## Amended claims

### Amended claims in accordance with Rule 137(2) EPC.

1. Method for performing lawful interception in a mobile communication network (100) regarding a user equipment (20) being connected to the mobile communication network (100) and/or regarding an IP multimedia subsystem session, IMS session, wherein lawful interception is able to be realized, regarding the user equipment (20), wherein, in case of lawful interception being realized, a law enforcement agency (400, 400', 400") is provided with corresponding lawful interception data,
wherein, in order to perform lawful interception regarding a specific user equipment (20) and/or regarding a specific IP multimedia subsystem session, the method comprises the following steps:
-- in a first step, the specific IP multimedia subsystem session, involving the specific user equipment (20), is initiated, established or prepared to be established, wherein as part thereof session-specific signaling data are buffered, wherein the original signaling messages are buffered as part of the session-specific signaling data,
-- in a second step, subsequent to the first step, in case that lawful interception is initiated while the specific IP multimedia subsystem session, involving the specific user equipment (20), is already established and operatively used, such initiation of lawful interception results in corresponding lawful interception data being generated and provided to the law enforcement agency (400, 400', 400"), wherein, in addition, the session-specific signaling data are likewise provided to the law enforcement agency (400, 400', 400").

2. Method according to claim 1, wherein the session-specific signaling data are buffered in an element or entity of the IP multimedia subsystem, especially a proxy call session control function, P-CSCF.

3. Method according to one of the preceding claims, wherein the session-specific signaling data comprise the historic signaling information regarding the specific IP multimedia subsystem session, especially starting from its establishment, wherein the session-specific signaling data especially comprise the session initiation protocol messages, SIP messages, generated or exchanged within the IP multimedia subsystem regarding the specific IP multimedia subsystem session, especially such SIP messages to and from the specific user equipment (20), especially SIP-invite messages, SIP-re-invite messages, SIP messages relating to a modification of the specific IP multimedia subsystem session such as relating to adding a video stream or to a change of a codec or a modification of a participant of the specific IP multimedia subsystem session, wherein the session-specific signaling data especially comprise, regarding each participant of the specific IP multimedia subsystem session, at least one out of the following:
-- the SIP-address,
-- the phone number,
-- the international mobile subscriber number, IMSI, and/or the permanent equipment identifier number,
-- an identifier information of the subscriber identity module, IMSI IMEI(4G)/permanent equipment ID number (5G),
-- an identifier information of the subscriber identity module, SIM card, or of the universal integrated circuit card, UICC card.

4. Method according to one of the preceding claims, wherein, in a third step subsequent to the second step, the specific IP multimedia subsystem session, involving the specific user equipment (20), is terminated and the session-specific signaling data are deleted,
wherein in case that lawful interception is initiated as part of the second step, the session-specific signaling data are transmitted, together with the lawful interception data, to the law enforcement agency (400, 400', 400").

5. Method according to one of the preceding claims, wherein the mobile communication network (100) to which the specific user equipment (20) is connected corresponds to a home mobile communication network, the home mobile communication network comprising an IP multimedia subsystem entity or functionality (101), wherein the IP multimedia subsystem entity or functionality (101) is handling the specific IP multimedia subsystem session, and the home mobile communication network is connected to the law enforcement agency (400).

6. Method according to one of the preceding claims, wherein the mobile communication network (100) to which the specific user equipment (20) is connected corresponds to a visited mobile communication network, wherein the specific user equipment (20) is furthermore assigned to a home mobile communication network (200) comprising an IP multimedia subsystem entity or functionality (201), wherein the IP multimedia subsystem entity or functionality (201) is handling the specific IP multimedia subsystem session, wherein the mobile communication network (100) comprises a lawful interception mirror IP multimedia subsystem state function, LMISF, (102), wherein the law enforcement agency (400') is connected to the mobile communication network (100) via the lawful interception mirror IP multimedia subsystem state function, LMISF, (102),
wherein especially the law enforcement agency (400') is related to the mobile communication network (100) as the visited mobile communication network of the specific user equipment (20), especially as opposed to the law enforcement agency (400) of the home mobile communication network (200),
wherein especially - upon the specific IP multimedia subsystem session, involving the specific user equipment (20), being initiated, established or prepared to be established - the lawful interception mirror IP multimedia subsystem state function (102) buffers the session-specific signaling data.

7. Method according to one of the preceding claims, wherein the mobile communication network (100) to which the user equipment (20) is connected corresponds to a visited mobile communication network, wherein the specific user equipment (20) has previously been connected - especially while the specific IP multimedia subsystem session having been active - to a further visited mobile communication network (200) and wherein the specific user equipment (20) is furthermore assigned to a home mobile communication network (300) comprising an IP multimedia subsystem entity or functionality (301), wherein the IP multimedia subsystem entity or functionality (301) is handling the specific IP multimedia subsystem session, wherein the mobile communication network (100) comprises a lawful interception mirror IP multimedia subsystem state function, LMISF, (102), wherein the law enforcement agency (400") is connected to the mobile communication network (100) via the lawful interception mirror IP multimedia subsystem state function, LMISF, (102),
wherein especially the law enforcement agency (400") is related to the mobile communication network (100) as the visited mobile communication network of the specific user equipment (20), especially as opposed to the law enforcement agencies (400, 400') of the home mobile communication network (300) and the further visited mobile communication network (200),
wherein especially the session-specific signaling data - upon the specific IP multimedia subsystem session, involving the specific user equipment (20), being initiated, established or prepared to be established - are buffered by the IP multimedia subsystem entity or functionality (301), and, upon the specific IP multimedia subsystem session being handled by the mobile communication network (100), the session-specific signaling data are transmitted to the mobile communication network (100), especially to the packet core of the mobile communication network (100).

8. Method according to one of the preceding claims, wherein the IP multimedia subsystem session is established between the user equipment (20) and a further user equipment (21), the further user equipment (21) being either directly or indirectly connected to the mobile communication network (100, 200, 300), especially to the home mobile communication network (100, 200, 300) of the user equipment (20).

9. System or mobile communication network (100) for performing lawful interception regarding a user equipment (20) being connected to the mobile communication network (100) and/or regarding an IP multimedia subsystem session, IMS session, wherein lawful interception is able to be realized, regarding the user equipment (20), wherein, in case of lawful interception being realized, a law enforcement agency (400) is provided with corresponding lawful interception data,
wherein, in order to perform lawful interception regarding a specific user equipment (20) and/or regarding a specific IP multimedia subsystem session, the system or mobile communication network (100) is configured such that:
-- the specific IP multimedia subsystem session, involving the specific user equipment (20), is initiated, established or prepared to be established, wherein as part thereof session-specific signaling data are defined and buffered, wherein the original signaling messages are buffered as part of the session-specific signaling data, -- in case that lawful interception is initiated while the specific IP multimedia subsystem session, involving the specific user equipment (20), is already established and operatively used, such initiation of lawful interception results in corresponding lawful interception data being generated and provided to the law enforcement agency (400, 400', 400"), wherein, in addition, the session-specific signaling data are likewise provided to the law enforcement agency (400, 400', 400").

10. User equipment (20) for performing lawful interception in a mobile communication network (100) regarding a user equipment (20) being connected to the mobile communication network (100) and/or regarding an IP multimedia subsystem session, IMS session,
wherein lawful interception is able to be realized, regarding the user equipment (20), wherein, in case of lawful interception being realized, a law enforcement agency (400, 400', 400") is provided with corresponding lawful interception data,
wherein, in order to perform lawful interception regarding a specific user equipment (20) and/or regarding a specific IP multimedia subsystem session, the user equipment (20) is configured such that:
-- the specific IP multimedia subsystem session, involving the specific user equipment (20), is initiated, established or prepared to be established, wherein as part thereof session-specific signaling data are defined and buffered, wherein the original signaling messages are buffered as part of the session-specific signaling data, -- in case that lawful interception is initiated while the specific IP multimedia subsystem session, involving the specific user equipment (20), is already established and operatively used, such initiation of lawful interception results in corresponding lawful interception data being generated and provided to the law enforcement agency (400, 400', 400"), wherein, in addition, the session-specific signaling data are likewise provided to the law enforcement agency (400, 400', 400").

11. Program comprising a computer readable program code, which, when executed on a computer and/or on a network node of a mobile communication network (100) and/or on an IP multimedia subsystem entity or functionality (101, 201, 301) and/or on a lawful interception mirror IP multimedia subsystem state function, LMISF, (102), or in part on a network node of a mobile communication network (100) and/or in part on an IP multimedia subsystem entity or functionality (101, 201, 301) and/or in part on a lawful interception mirror IP multimedia subsystem state function, LMISF, (102), causes the computer and/or the network node of the mobile communication network (100) and/or the IP multimedia subsystem entity or functionality (101, 201, 301) and/or the lawful interception mirror IP multimedia subsystem state function, LMISF, (102) to perform a method according one of claims 1 to 7.

12. Computer-readable medium comprising instructions which when executed on a computer and/or on a network node of a mobile communication network (100) and/or on an IP multimedia subsystem entity or functionality (101, 201, 301) and/or on a lawful interception mirror IP multimedia subsystem state function, LMISF, (102), or in part on a network node of a mobile communication network (100) and/or in part on an IP multimedia subsystem entity or functionality (101, 201, 301) and/or in part on a lawful interception mirror IP multimedia subsystem state function, LMISF, (102), causes the computer and/or the network node of the mobile communication network (100) and/or the IP multimedia subsystem entity or functionality (101, 201, 301) and/or the lawful interception mirror IP multimedia subsystem state function, LMISF, (102) to perform a method according to one of claims 1 to 7.
